(19) **Europäisches Patentamt / European Patent Office / Office européen des brevets**

(11) **EP 4 593 272 A1**

(12) # EUROPEAN PATENT APPLICATION

(43) Date of publication:
**30.07.2025 Bulletin 2025/31**

(21) Application number: **25153639.7**

(22) Date of filing: **23.01.2025**

(51) International Patent Classification (IPC):
**H02M 1/00** $^{(2006.01)}$ **H02M 1/32** $^{(2007.01)}$
**H02M 7/44** $^{(2006.01)}$

(52) Cooperative Patent Classification (CPC):
**H02M 1/0025; H02M 1/32; H02M 7/44**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.01.2024 CN 202410119356**

(71) Applicant: **Huawei Digital Power Technologies Co., Ltd.**
**Shenzhen, Guangdong 518043 (CN)**

(72) Inventors:
• **LI, Junjie**
  **Shenzhen, 518043 (CN)**
• **WANG, Xu**
  **Shenzhen, 518043 (CN)**
• **YU, Xinyu**
  **Shenzhen, 518043 (CN)**
• **SHAO, Zhangping**
  **Shenzhen, 518043 (CN)**
• **XIN, Kai**
  **Shenzhen, 518043 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **POWER CONVERTER AND POWER CONVERTER CONTROL METHOD**

(57) This application provides a power converter and a power converter control method. The power converter includes a three-phase inverter circuit and a controller, an input end of the three-phase inverter circuit is configured to connect to a direct current power supply, and a three-phase output end of the three-phase inverter circuit is configured to connect to a grid. The controller is configured to: when a target value of three-phase voltages output by the three-phase inverter circuit is greater than a voltage threshold, a value of a maximum phase voltage in the three-phase voltages output by the three-phase inverter circuit is greater than a first voltage value, a value of a minimum phase voltage in the three-phase voltages output by the three-phase inverter circuit is less than a second voltage value, and a positive-sequence component of the three-phase voltages is greater than a third voltage value, or when an absolute value of a difference between any phase voltage and another phase voltage in three-phase voltages is greater than a first preset threshold, and a positive-sequence component of the three-phase voltages is greater than a third voltage value, control an absolute value of an active current and a value of a reactive current that are output by the three-phase inverter circuit to separately change in a negative correlation with the target value of the three-phase voltages.

FIG. 1

EP 4 593 272 A1

## Description

## TECHNICAL FIELD

This application relates to the power electronics field, and in particular, to a power converter and a power converter control method.

## BACKGROUND

As an on-grid capacity in a new energy power supply system increases, there are more on-grid inverters in the power supply system. A large quantity of new energy power plants output electric energy to a grid through long-distance power transmission lines. When the long-distance power transmission line is short-circuited or the on-grid inverter is faulty, the power supply system is short-circuited. A switch is disposed on a line between the on-grid inverter and the grid. When a short-circuit fault occurs in the power supply system, a power converter may respond based on fault ride-through. In a serious case, overcurrent protection of a grid protection apparatus in the power supply system may be triggered to turn off a switch corresponding to a faulty line, and the switch is turned on again after the fault at a short-circuit point is rectified. Therefore, before the switch of the power supply system is turned on again or reclosing succeeds, a faulty phase of the power supply system is disconnected, and other non-faulty phases keep operating. However, during phase-loss operation of the power supply system, if the on-grid inverter still responds based on the short-circuit fault, the on-grid inverter outputs a large amount of reactive power and active power, and a power transmission line and a transformer coil may be overloaded and damaged. As a result, overvoltage and oscillation occur on a high-voltage side of the grid, and a power device in the power supply system is damaged.

## SUMMARY

Embodiments of this application provide a power converter and a power converter control method, to reduce impact of the power converter on a grid when the power converter is in a phase-loss on-grid mode, and enable the power converter to support switching of a power supply system from phase-loss on-grid to normal on-grid without disconnecting from the grid.

According to a first aspect, this application provides a power converter. The power converter includes a three-phase inverter circuit and a controller, an input end of the three-phase inverter circuit is configured to connect to a direct current power supply, and a three-phase output end of the three-phase inverter circuit is configured to connect to a grid. The controller is configured to: when the power converter is in a phase-loss on-grid mode, and a target value of three-phase voltages at the three-phase output end of the three-phase inverter circuit is greater than a voltage threshold, control an absolute value of an active current and a value of a reactive current that are output by the three-phase inverter circuit to separately change in a negative correlation with the target value of the three-phase voltages; or when an absolute value of a difference between any phase voltage and another phase voltage in three-phase voltages output by the three-phase inverter circuit is greater than a first preset threshold, and a positive-sequence component of the three-phase voltages is greater than a third voltage value, control an absolute value of active power and a value of reactive power that are output by the three-phase inverter circuit to separately change in a negative correlation with the target value of the three-phase voltages, where the target value of the three-phase voltages is a maximum alternating current voltage amplitude or a maximum valid alternating current voltage value in the three-phase voltages at the three-phase output end of the three-phase inverter circuit, or an amplitude of a three-phase voltage vector at the three-phase output end of the three-phase inverter circuit. When the power converter operates in a phase-loss on-grid mode, a value of a maximum phase voltage output by the three-phase inverter circuit is greater than a first voltage value, a value of a minimum phase voltage output by the three-phase inverter circuit is less than a second voltage value, and a positive-sequence component of the three-phase voltages is greater than a third voltage value, or when an absolute value of a difference between at least one phase voltage and another phase voltage in the three-phase voltages is greater than a first preset threshold, a positive-sequence component of the three-phase voltages is greater than a third voltage value, the first voltage value is greater than the third voltage value, the third voltage value is greater than the second voltage value, a maximum value of the three-phase voltages is the maximum alternating current voltage amplitude or the maximum valid alternating current voltage value in the three-phase voltages at the three-phase output end of the three-phase inverter circuit, and the value of the minimum phase voltage is a minimum alternating current voltage amplitude or a minimum valid alternating current voltage value in the three-phase voltages at the three-phase output end of the three-phase inverter circuit.

In this application, the controller detects, based on the three-phase voltages at the three-phase output end of the three-phase inverter circuit, whether a power supply system operates with a phase loss. No additional phase loss detection apparatus is required, costs of detecting a phase-loss working condition are low, and negative-sequence reactive power or a harmonic does not need to be injected into the grid for detection, to avoid affecting voltage quality of the grid. After identifying that the power converter operates with a phase loss, that is, identifying that a switch corresponding to a fault phase in the power converter is turned off, the controller dynamically decreases or increases the output active current and the output reactive current based on the three-phase voltages at the three-phase output end of the three-phase inverter circuit. This avoids overload of active power and reactive power that are borne by a normal phase in the power converter in a phase-loss period, meets active power and reactive power requirements of the power supply system as much as possible, and prevents an output port of the normal phase from being damaged due to overheat caused by an increase in a voltage and a current, so that the power converter keeps on-grid in the phase-loss period until the power supply system is supported in completing switching from phase-loss on-grid to normal on-grid.

In a possible implementation, the controller is configured to control the absolute value of the active current output by the three-phase inverter circuit to change in the negative correlation with the target value of the three-phase voltages and to be less than or equal to a maximum value of an absolute value of an active current instruction value, where the active current instruction value is determined by input power provided by the direct current power supply or required power of the grid. After identifying that the power supply system operates with the phase loss, the controller dynamically decreases or increases the output active current based on values of the three-phase voltages at the three-phase output end of the three-phase inverter circuit, thereby reducing impact of the power converter on the grid and meeting an active power requirement of the power supply system as much as possible, and enabling the power converter to support switching of the power supply system from the phase-loss on-grid to the normal on-grid without disconnecting from the grid.

In a possible implementation, the controller is configured to control the value of the reactive current output by the three-phase inverter circuit to change in the negative correlation with the target value of the three-phase voltages and to be less than or equal to a maximum value of an absolute value of a reactive current instruction value, where the reactive current instruction value is determined by an output voltage of the power converter. After identifying that the power supply system operates with the phase loss, the controller dynamically decreases or increases the output reactive current based on the values of the three-phase voltages at the three-phase output end of the three-phase inverter circuit, thereby reducing the impact of the power converter on the grid and meeting a reactive power requirement of the power supply system as much as possible, and enabling the power converter to support switching of the power supply system from the phase-loss on-grid to the normal on-grid without disconnecting from the grid.

In a possible implementation, the controller is configured to control the absolute value of the active current and/or an absolute value of the reactive current that are/is output by the three-phase inverter circuit to decrease, so that an apparent current is less than or equal to a current threshold, where the apparent current is an arithmetic square root of a sum of squares of the active current and the reactive current that are output by the three-phase inverter circuit. The active current or the reactive current output by the three-phase inverter circuit is controlled, so that the apparent current does not exceed the current threshold, thereby avoiding overcurrent of the power converter, and further improving operating safety of the power converter.

In a possible implementation, the controller is configured to: when the power converter is in the phase-loss on-grid, and when the target value of the three-phase voltages is less than or equal to the voltage threshold, control the active current and the reactive current that are output by the three-phase inverter circuit to keep fixed; and the absolute value of the active current output by the three-phase inverter circuit to be less than or equal to the maximum value of the absolute value of the active current instruction value, and the absolute value of the reactive current output by the three-phase inverter circuit to be less than or equal to the maximum value of the absolute value of the reactive current instruction value. When the target value of the three-phase voltages at the three-phase output end of the three-phase inverter circuit is less than or equal to the voltage threshold, after it is identified that the power supply system operates with the phase loss, the active current and the reactive current that are output by the three-phase inverter circuit are controlled to be preset fixed values. This prevents the three-phase inverter circuit from outputting a large amount of reactive power and active power in the phase-loss period, and reduces output power shared by a transmission line corresponding to the normal phase.

In a possible implementation, the controller is configured to: when the value of the maximum phase voltage is less than a fourth voltage value, and the value of the minimum phase voltage is greater than a fifth voltage value, or when a difference between the value of the maximum phase voltage and the value of the minimum phase voltage is less than a second preset threshold, control the active current output by the three-phase inverter circuit to change with the input power provided by the direct current power supply or the required power of the grid and the reactive current output by the three-phase inverter circuit to change with an output voltage of the three-phase inverter circuit, where the fourth voltage value is greater than the third voltage value and less than or equal to the first voltage value, and the fifth voltage value is greater than or equal to the second voltage value and less than the third voltage value. The controller detects, based on the three-phase voltages output by the three-phase inverter circuit, that the voltage at the port of the power converter recovers to normal, that is, whether the power converter successfully switches from the phase-loss on-grid to the normal on-grid, and recovers instructions in a normal on-grid period after identifying that the voltage at the port recovers to normal. This ensures support of the power converter for the grid.

In a possible implementation, the controller is configured to: when an absolute value of a difference between at least one phase voltage and another phase voltage in the three-phase voltages is less than a third preset threshold, control the active current output by the three-phase inverter circuit to change with the input power provided by the direct current power supply or the required power of the grid and the reactive current output by the three-phase inverter circuit to change with the output voltage of the three-phase inverter circuit, where the third preset threshold is less than or equal to the first preset threshold. When the absolute value of the difference between the phase voltages in the three-phase voltages output by the three-phase inverter circuit decreases, the controller determines that the power converter successfully switches from the phase-loss on-grid to the normal on-grid, and recovers the instructions in the normal on-grid period after identifying the normal on-grid. This ensures support of the power converter for the grid.

In a possible implementation, the power converter is a photovoltaic inverter, the direct current power supply is a photovoltaic module, the active current instruction value is positively correlated with a value of maximum output power of the photovoltaic module, and the reactive current instruction value changes in a negative correlation with a value of the output voltage of the photovoltaic inverter. The instruction before the phase-loss on-grid mode is recovered after the normal on-grid is identified. This ensures support of the power converter for the grid.

In a possible implementation, the power converter is a power conversion system, the direct current power supply is an energy storage battery, the active current instruction value is positively correlated with a value of the required power of the grid, and the reactive current instruction value changes in a negative correlation with a value of the output voltage of the converter. The instruction before the phase-loss on-grid mode is recovered after the normal on-grid is identified. This ensures support of the power converter for the grid.

According to a second aspect, this application provides a power converter control method. The method includes: when a target value of three-phase voltages output by a three-phase inverter circuit in a power converter is greater than a voltage threshold, a value of a maximum phase voltage in the three-phase voltages output by the three-phase inverter circuit is greater than a first voltage value, a value of a minimum phase voltage in the three-phase voltages output by the three-phase inverter circuit is less than a second voltage value, and a positive-sequence component of the three-phase voltages is greater than a third voltage value, or when an absolute value of a difference between any phase voltage and another phase voltage in three-phase voltages output by a three-phase inverter circuit in the power converter is greater than a first preset threshold, and a positive-sequence component of the three-phase voltages is greater than a third voltage value, controlling an absolute value of an active current and a value of a reactive current that are output by the three-phase inverter circuit to separately change in a negative correlation with the target value of the three-phase voltages. The first voltage value is greater than the third voltage value, the third voltage value is greater than the second voltage value, the target value of the three-phase voltages is a maximum alternating current voltage amplitude or a maximum valid alternating current voltage value in the three-phase voltages, or an amplitude of a three-phase voltage vector output by the three-phase inverter circuit, the value of the maximum phase voltage is the maximum alternating current voltage amplitude or the maximum valid alternating current voltage value in the three-phase voltages, and the value of the minimum phase voltage is a minimum alternating current voltage amplitude or a minimum valid alternating current voltage value in the three-phase voltages.

In this application, whether a power supply system operates with a phase loss is detected based on the three-phase voltages at the three-phase output end of the three-phase inverter circuit. No additional phase loss detection apparatus is required, costs of detecting a phase-loss working condition are low, and negative-sequence reactive power or a harmonic does not need to be injected into a grid for detection, to avoid affecting voltage quality of the grid. After it is identified that the power converter operates with a phase loss, that is, it is identified that a switch corresponding to a fault phase in the power converter is turned off, the output active current and the output reactive current are dynamically decreased or increased based on the three-phase voltages at the three-phase output end of the three-phase inverter circuit. This avoids overload of active power and reactive power that are borne by a normal phase in the power converter in a phase-loss period, meets active power and reactive power requirements of the power supply system as much as possible, and prevents an output port of the normal phase from being damaged due to overheat caused by an increase in a voltage and a current, so that the power converter keeps on-grid in the phase-loss period until the power supply system is supported in completing switching from phase-loss on-grid to normal on-grid.

In a possible implementation, the method includes: controlling the absolute value of the active current output by the three-phase inverter circuit to change in the negative correlation with the target value of the three-phase voltages and to be less than or equal to a maximum value of an absolute value of an active current instruction value, where the active current instruction value is determined by input power provided by the direct current power supply or required power of the grid. After it is identified that the power supply system operates with the phase loss, the output active current is dynamically decreased or increased based on values of the three-phase voltages at the three-phase output end of the three-phase inverter circuit, thereby reducing impact of the power converter on the grid and meeting an active power requirement of the power supply system as much as possible, and enabling the power converter to support switching of the power supply system from the phase-loss on-grid to the normal on-grid without disconnecting from the grid.

In a possible implementation, the method includes: controlling the value of the reactive current output by the three-phase inverter circuit to change in the negative correlation with the target value of the three-phase voltages and to be less than or equal to a maximum value of an absolute value of a reactive current instruction value, where the reactive current instruction value is determined by an output voltage of the power converter. After it is identified that the power supply system operates with the phase loss, the output reactive current is dynamically decreased or increased based on the values of the three-phase voltages at the three-phase output end of the three-phase inverter circuit, thereby reducing the impact of the power converter on the grid and meeting a reactive power requirement of the power supply system as much as possible, and enabling the power converter to support switching of the power supply system from the phase-loss on-grid to the normal on-grid without disconnecting from the grid.

In a possible implementation, the method includes: controlling the absolute value of the active current and/or an absolute value of the reactive current that are/is output by the three-phase inverter circuit to decrease, so that an apparent current is less than or equal to a current threshold, where the apparent current is an arithmetic square root of a sum of squares of the active current and the reactive current that are output by the three-phase inverter circuit. The active current or the reactive current output by the three-phase inverter circuit is controlled, so that the apparent current does not exceed the current threshold, thereby avoiding overcurrent of the power converter, and further improving operating safety of the power converter.

In a possible implementation, the method includes: when the target value of the three-phase voltages is less than or equal to the voltage threshold, controlling the active current and the reactive current that are output by the three-phase inverter circuit to keep fixed; and the absolute value of the active current output by the three-phase inverter circuit to be less than or equal to the maximum value of the absolute value of the active current instruction value, and the absolute value of the reactive current output by the three-phase inverter circuit to be less than or equal to the maximum value of the absolute value of the reactive current instruction value. When the target value of the three-phase voltages at the three-phase output end of the three-phase inverter circuit is less than or equal to the voltage threshold, after it is identified that the power supply system operates with the phase loss, the active current and the reactive current that are output by the three-phase inverter circuit are controlled to be preset fixed values. This prevents the three-phase inverter circuit from outputting a large amount of reactive power and active power in the phase-loss period, and reduces output power shared by a transmission line corresponding to the normal phase.

In a possible implementation, the method includes: when the value of the maximum phase voltage is less than a fourth voltage value, and the value of the minimum phase voltage is greater than a fifth voltage value, or when a difference between the value of the maximum phase voltage and the value of the minimum phase voltage is less than a second preset threshold, controlling the active current output by the three-phase inverter circuit to change with the input power provided by the direct current power supply or the required power of the grid and the reactive current output by the three-phase inverter circuit to change with an output voltage of the three-phase inverter circuit, where the fourth voltage value is greater than the third voltage value and less than or equal to the first voltage value, and the fifth voltage value is greater than or equal to the second voltage value and less than the third voltage value. It is detected, based on the three-phase voltages output by the three-phase inverter circuit, that the voltage at the port of the power converter recovers to normal, that is, it is detected whether the power converter successfully switches from the phase-loss on-grid to the normal on-grid, and instructions in a normal on-grid period are recovered after it is identified that the voltage at the port recovers to normal. This ensures support of the power converter for the grid.

In a possible implementation, the method includes: when an absolute value of a difference between at least one phase voltage and another phase voltage in the three-phase voltages is less than a third preset threshold, controlling the active current output by the three-phase inverter circuit to change with the input power provided by the direct current power supply or the required power of the grid and the reactive current output by the three-phase inverter circuit to change with the output voltage of the three-phase inverter circuit, where the third preset threshold is less than or equal to the first preset threshold. When the absolute value of the difference between the phase voltages in the three-phase voltages output by the three-phase inverter circuit decreases, it is determined that the power converter successfully switches from the phase-loss on-grid to the normal on-grid, and the instructions in the normal on-grid period are recovered after the normal on-grid is identified. This ensures support of the power converter for the grid.

## BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a diagram of another application scenario of a power supply system according to this application;
FIG. 4 is a diagram of another application scenario of a power supply system according to this application;
FIG. 5 is a diagram of output control of a three-phase inverter circuit according to this application;
FIG. 6 is a diagram of a structure of a power supply system according to this application; and
FIG. 7 is a schematic flowchart of a power converter control method according to this application.

## DESCRIPTION OF EMBODIMENTS

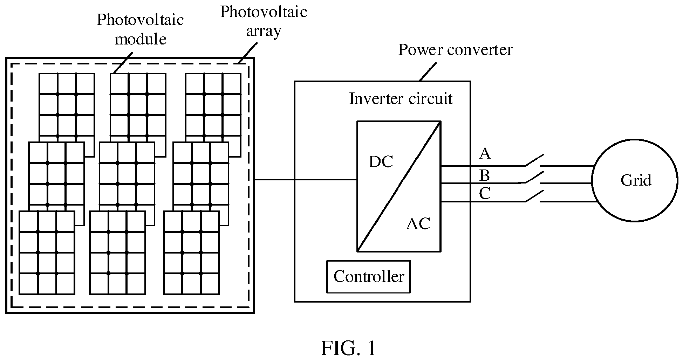

FIG. 1 is a diagram of an application scenario of a power supply system according to this application. The power supply system provided in this application may include a direct current power supply and a power converter. The direct current power supply may be a photovoltaic array. The photovoltaic array includes a plurality of photovoltaic modules connected in series or in parallel. An output end of the photovoltaic module may be connected to an input end of the power converter. Herein, the power converter may include a three-phase inverter circuit. An input end of the three-phase inverter circuit may be connected to the photovoltaic module, and an output end of the three-phase inverter circuit is configured to connect to a grid. The output end of the three-phase inverter circuit may include ports of three phases A, B, and C. The power converter may perform, through the three-phase inverter circuit, inversion conversion on a direct current provided by the photovoltaic array, to output an alternating current obtained through the inversion conversion to the grid for power supply.

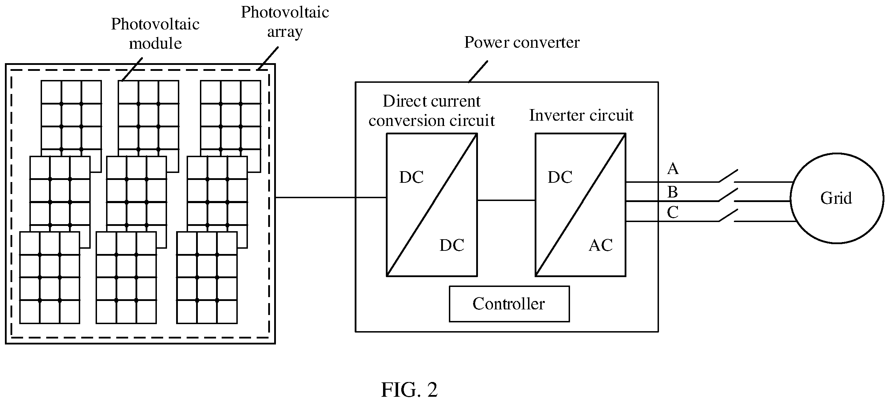

In some feasible implementations, the power converter may include a direct current conversion circuit and the three-phase inverter circuit. FIG. 2 is a diagram of another application scenario of the power supply system according to this application. As shown in FIG. 2, an input end of the direct current conversion circuit may be connected to the photovoltaic module, and an output end of the direct current conversion circuit may be connected to the input end of the three-phase inverter circuit. The output end of the three-phase inverter circuit is configured to connect to the grid. The power converter may perform, through the direct current conversion circuit, voltage transformation on a direct current provided by the photovoltaic array, and perform inversion conversion, through the three-phase inverter circuit, on a direct current obtained through the voltage transformation, to output an alternating current obtained through the inversion conversion to the grid for power supply.

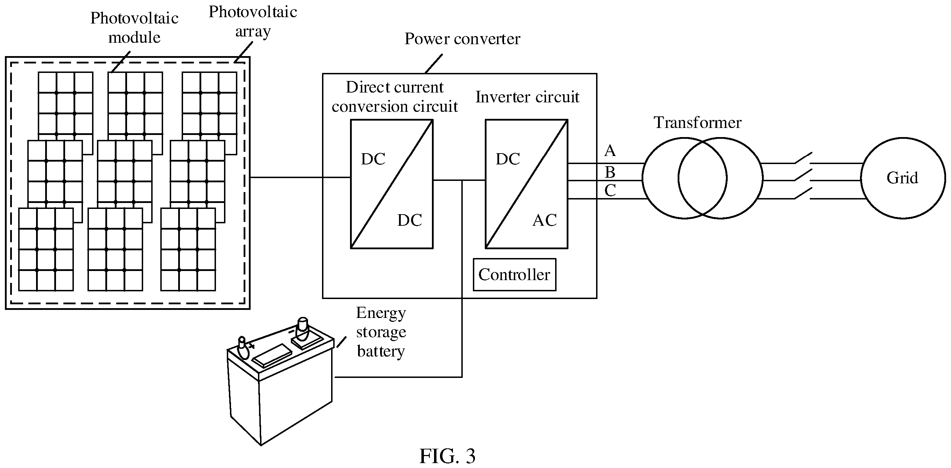

In some feasible implementations, the direct current power supply may further include an energy storage battery. FIG. 3 is a diagram of another application scenario of the power supply system according to this application. As shown in FIG. 3, an output end of the energy storage battery may be connected to the output end of the direct current conversion circuit in the power converter. The energy storage battery may provide a direct current for the three-phase inverter circuit. The three-phase inverter circuit performs inversion conversion on the direct current provided by the energy storage battery, and outputs an alternating current obtained through the inversion conversion to the grid for power supply.

In some feasible implementations, after the direct current conversion circuit in the power converter performs voltage transformation on a direct current provided by the photovoltaic array in FIG. 3, the energy storage battery may be charged based on the direct current output by the power converter.

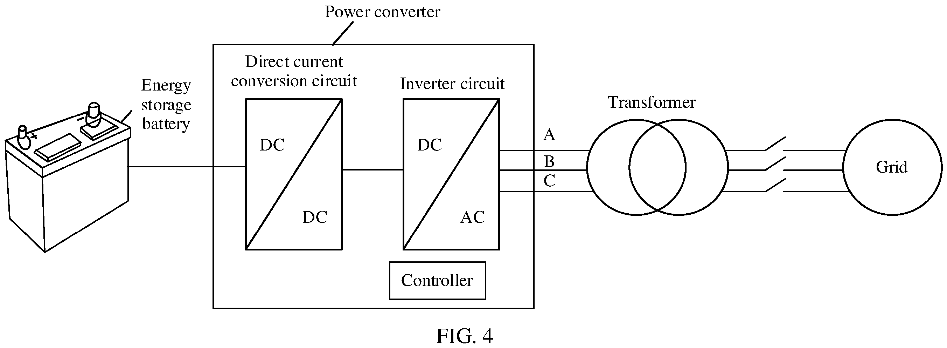

In some feasible implementations, the output end of the energy storage battery may be connected to the input end of the direct current conversion circuit in the power converter. FIG. 4 is a diagram of another application scenario of the power supply system according to this application. As shown in FIG. 4, the output end of the energy storage battery may be connected to the input end of the direct current conversion circuit in the power converter. The energy storage battery may provide a direct current for the input end of the direct current conversion circuit. The direct current conversion circuit performs voltage transformation on the direct current provided by the energy storage battery, and performs inversion conversion on a direct current obtained through the voltage transformation, to output an alternating current obtained through the inversion conversion to the grid for power supply.

In some feasible implementations, the power supply system may further include a transformer. As shown in FIG. 3 or FIG. 4, the output end of the three-phase inverter circuit in the power converter may be connected to the grid via the transformer, and the transformer is configured to: perform voltage transformation on an alternating current output by the power converter, and then output an alternating current to the grid for power supply.

In the application scenarios shown in FIG. 1 to FIG. 4, a short-circuit fault may occur in the power supply system. For example, a line between the power converter and the grid is short-circuited, or the power converter is faulty. In the foregoing power supply system, a switch (for example, a circuit breaker) may be included on the line between the power converter and the grid, in other words, one switch is disposed between each of the ports of the three phases A, B, and C of the power converter and the grid. Refer to the power converter shown in FIG. 1, FIG. 2, or FIG. 3 again. A switch is disposed between each of the ports of the three phases A, B, and C of the three-phase inverter circuit in the power converter and the grid. When a short-circuit fault occurs in the power supply system, for example, the line between the power converter and the grid is short-circuited, the power converter may respond based on fault ride-through. In a serious case, overcurrent protection of a grid protection apparatus in the power supply system may be triggered to turn off a switch corresponding to a faulty line, and the corresponding switch is turned on again after the fault at a short-circuit point is removed. The power converter shown in FIG. 1 is used as an example. When a line between the output port of the phase A of the power converter and the grid is short-circuited, the grid protection apparatus in the power supply system is triggered to perform overcurrent protection to turn off a switch corresponding to the output port of the phase A, and before the switch is turned on again, switches corresponding to the output ports of the phase B and phase C keep on, and the power supply system operates with a phase loss. However, during phase-loss operation, if the power converter still responds based on the short-circuit fault, for example, the power converter may perform high voltage ride-through protection during the phase-loss operation, so that reactive power output by the power converter increases as a voltage of the grid increases, and active power is controlled to keep unchanged. Alternatively, the power converter may perform low voltage ride-through protection, so that the reactive power output by the power converter increases as the voltage of the grid decreases, and the active power is controlled to keep unchanged. This causes reactive power and active power at the output ports of the phase B and phase C of the power converter to be overloaded, and lines of the output ports of the phase B and phase C to be damaged. As a result, overvoltage and oscillation occur on a high-voltage side of the grid, and a power device in the power supply system is damaged.

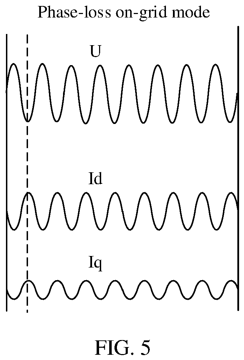

In the power supply system provided in this application, the power converter includes a controller, the direct current conversion circuit, and the three-phase inverter circuit. In an operating process of the power converter, the three-phase inverter circuit may output three-phase voltages (or may be referred to as three-phase alternating currents or three-phase grid voltages), and the three-phase voltages may include voltages of the three phases A, B, and C. A positive-sequence component, a negative-sequence component, and a zero-sequence component may be divided based on a sequence of the three phases A, B, and C. The positive-sequence component is that the phase A leads the phase B by 120 degrees, the phase B leads the phase C by 120 degrees, and the phase C leads the phase A by 120 degrees. The negative-sequence component is that the phase A lags behind the phase B by 120 degrees, the phase B lags behind the phase C by 120 degrees, and the phase C lags behind the phase A by 120 degrees. The zero-sequence component is that phases of the three phases A, B, and C are the same. In addition, in an alternating current, there is a phase difference between a current and a voltage, and the current may be divided into two parts based on vector analysis: an active current that is in a same phase as a voltage vector, and a reactive current that leads or lags behind the voltage vector by 90 degrees. In other words, the current may be divided into an active component and a reactive component. When a value of a maximum phase voltage in the three-phase voltages output by the three-phase inverter circuit is greater than a first voltage value, a value of a minimum phase voltage value is less than a second voltage value, and a positive-sequence component of the three-phase voltages is greater than a third voltage value, the controller determines that the power converter is in a phase-loss on-grid mode. For example, a short-circuit fault may occur on lines between the ports of the three phases A, B, and C of the power converter and the grid, and the grid protection apparatus in the power supply system performs overcurrent protection to control a switch corresponding to the faulty line to be turned off, so that the power supply system operates with a phase loss. The value of the maximum phase voltage output by the three-phase inverter circuit may be a maximum valid alternating current voltage value or a maximum alternating current voltage amplitude in the three-phase voltages. The value of the minimum phase voltage output by the three-phase inverter circuit may be a minimum valid alternating current voltage value or a minimum alternating current voltage amplitude in the three-phase voltages. Alternatively, when an absolute value of a difference (which may be a difference of a valid value) between at least one phase voltage and another phase voltage in the three-phase voltages at the three-phase output end of the three-phase inverter circuit is greater than a first voltage value, and a positive-sequence component of the three-phase voltages is greater than a third voltage value, the controller determines that the power converter is in a phase-loss on-grid mode. The first voltage value is greater than the third voltage value, and the third voltage value is greater than the second voltage value. Further, when the power converter is in the phase-loss on-grid mode, the controller may control an active current (specifically, may control an absolute value of the active current output by the three-phase inverter circuit) and a value of a reactive current that are output by the three-phase inverter circuit to separately change in a negative correlation with a target value of the three-phase voltages, or control active power (specifically, may control an absolute value of the active power output by the three-phase inverter circuit) and a value of reactive power that are output by the three-phase inverter circuit to separately change in a negative correlation with the target value of the three-phase voltages. Specifically, FIG. 5 is a diagram of output control of the three-phase inverter circuit according to this application. For example, the controller controls the active current and the reactive current that are output by the three-phase inverter circuit. When the short-circuit fault occurs on the line between the ports of the three phases A, B, and C of the power converter and the grid, the grid protection apparatus performs overcurrent protection to control a switch corresponding to the faulty line to be turned off, and the power converter is in the phase-loss on-grid mode. The controller controls the active current and the reactive current that are output by the three-phase inverter circuit to be Id and Iq. Herein, Id and Iq change in the negative correlation with the target value U of the three-phase voltages. A manner in which the controller controls the active power and the reactive power that are output by the three-phase inverter circuit is similar to that in which the controller controls the active current and the reactive current that are output by the three-phase inverter circuit. Details are not described herein again. Herein, the controller detects, based on the three-phase voltages at the three-phase output end of the three-phase inverter circuit, whether the power supply system operates with the phase loss. No additional phase loss detection apparatus is required, costs of detecting a phase-loss working condition are low, and negative-sequence reactive power or a harmonic does not need to be injected into the grid for detection, to avoid affecting voltage quality of the grid. After identifying that the power supply system operates with the phase loss, the controller dynamically decreases or increases the output active current and the output reactive current based on values of the three-phase voltages at the three-phase output end of the three-phase inverter circuit, or dynamically decreases or increases the output active power and the output reactive power based on the values of the three-phase voltages at the three-phase output end of the three-phase inverter circuit. This avoids overload of active power and reactive power that are borne by a normal phase in the power converter in a phase-loss period, meets active power and reactive power requirements of the power supply system as much as possible, and prevents an output port of the normal phase from being damaged due to overheat caused by an increase in a voltage and a current, so that the power converter keeps on-grid in the phase-loss period until the power supply system is supported in completing switching from phase-loss on-grid to normal on-grid.

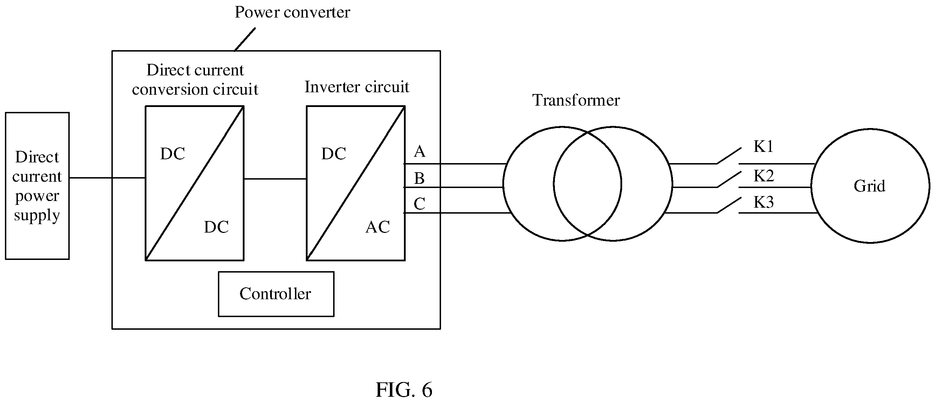

FIG. 6 is a diagram of a structure of a power supply system according to this application. The power supply system shown in FIG. 6 includes a power converter, a transformer, and a direct current power supply. The direct current power supply may be a photovoltaic array or an energy storage battery. The power converter includes a direct current conversion circuit and a three-phase inverter circuit. An input end of the direct current conversion circuit is connected to the direct current power supply, and an output end of the direct current conversion circuit is connected to an input end of the three-phase inverter circuit. Ports of three phases A, B, and C of the three-phase inverter circuit are configured to be connected to a grid via the transformer. The power converter may perform, via the direct current conversion circuit, voltage transformation on a direct current provided by the photovoltaic array, and perform inversion conversion, via the three-phase inverter circuit, on a direct current obtained through the voltage transformation, to output an alternating current obtained through the inversion conversion to the transformer. The transformer is configured to: perform voltage transformation on the alternating current output by the power converter, and then output an alternating current to the grid for power supply. In the foregoing power supply system, a switch (for example, a circuit breaker) may be included on a line between the power converter and the grid. A switch K1, a switch K2, and a switch K3 are respectively disposed between the outputs of the phase A, the phase B, and the phase C of the three-phase inverter circuit in the power converter and the grid. When a short-circuit fault occurs in the power supply system, for example, the line between the power converter and the grid is short-circuited, the power converter may respond based on fault ride-through. In a serious case, overcurrent protection of a grid protection apparatus in the power supply system may be triggered to turn off a switch corresponding to a faulty line. For example, when a line between the output port of the phase A of the power converter and the grid is short-circuited, overcurrent protection is triggered, and the switch K1 is turned off. Before the switch K1 is turned on again, the switch K2 and the switch K3 keep on, and the power supply system operates with a phase loss. The switch K1 is turned on again after the fault at a short-circuit point is removed.

In some feasible implementations, in the power supply system shown in FIG. 6, when a value of a maximum phase voltage output by the three-phase inverter circuit is greater than a first voltage value, a value of a minimum phase voltage value is less than a second voltage value, and a positive-sequence component of three-phase voltages is greater than a third voltage value, a controller determines that the power converter is in a phase-loss on-grid mode. Alternatively, when an absolute value of a difference between at least one phase voltage and another phase voltage in the three-phase voltages at the three-phase output end of the three-phase inverter circuit is greater than a first voltage value, and a positive-sequence component of the three-phase voltages is greater than a third voltage value, the controller determines that the power converter is in a phase-loss on-grid mode. The first voltage value is greater than the third voltage value, and the third voltage value is greater than the second voltage value. Further, when the power converter is in the phase-loss on-grid mode, the controller may control an absolute value of an active current and a value of a reactive current that are output by the three-phase inverter circuit to separately change in a negative correlation with a target value of the three-phase voltages, or control an absolute value of active power and a value of reactive power that are output by the three-phase inverter circuit to separately change in a negative correlation with the target value of the three-phase voltages. Herein, the controller detects, based on the three-phase voltages at the three-phase output end of the three-phase inverter circuit, whether the power supply system operates with the phase loss. No additional phase loss detection apparatus is required, costs of detecting a phase-loss working condition are low, and negative-sequence reactive power or a harmonic does not need to be injected into the grid for detection, to avoid affecting voltage quality of the grid. After identifying that the power supply system operates with the phase loss, the controller dynamically decreases or increases the output active current and the output reactive current based on values of the three-phase voltages at the three-phase output end of the three-phase inverter circuit, or dynamically decreases or increases the output active power and the output reactive power based on the values of the three-phase voltages at the three-phase output end of the three-phase inverter circuit. This avoids overload of active power and reactive power that are borne by a normal phase in the power converter in a phase-loss period, meets active power and reactive power requirements of the power supply system as much as possible, and prevents an output port of the normal phase from being damaged due to overheat caused by an increase in a voltage and a current, so that the power converter keeps on-grid in the phase-loss period until the power supply system is supported in completing switching from phase-loss on-grid to normal on-grid.

The following describes the power converter provided in embodiments of this application by using examples with reference to FIG. 1 to FIG. 6. In some feasible implementations, the controller in the power converter may obtain the three-phase voltages from the three-phase output end of the three-phase inverter circuit, and when the value of the maximum phase voltage value output by the three-phase inverter circuit is greater than the first voltage value, the value of the minimum phase voltage value is less than the second voltage value, and a positive-sequence component of the three-phase voltages is greater than a third voltage value, the controller determines that the power converter is in a phase-loss on-grid mode. Alternatively, when the absolute value of the difference between the at least one phase voltage and the another phase voltage in the three-phase voltages at the three-phase output end of the three-phase inverter circuit is greater than the first voltage value, and a positive-sequence component of the three-phase voltages is greater than a third voltage value, the controller determines that the power converter is in a phase-loss on-grid mode. Herein, the first voltage value may be a high voltage ride-through trigger threshold or an overvoltage protection point, the second voltage value may be a low voltage ride-through trigger threshold or an undervoltage protection point, the first voltage value is greater than the third voltage value, and the third voltage value is greater than the second voltage value. The controller detects, based on the three-phase voltages at the three-phase output end of the three-phase inverter circuit, whether the power supply system operates with the phase loss. No additional phase loss detection apparatus is required, the costs of detecting the phase-loss working condition are low, and the negative-sequence reactive power or the harmonic does not need to be injected into the grid for the detection, to avoid affecting the voltage quality of the grid.

In some feasible implementations, when the power converter is in the phase-loss on-grid mode, and the target value of the three-phase voltages at the three-phase output end of the three-phase inverter circuit is greater than a voltage threshold, the controller may control the absolute value of the active current and the value of the reactive current that are output by the three-phase inverter circuit to separately change in the negative correlation with the target value of the three-phase voltages, or control the absolute value of the active power and the value of the reactive power that are output by the three-phase inverter circuit to separately change in the negative correlation with the target value of the three-phase voltages. Specifically, the target value of the three-phase voltages may be the maximum alternating current voltage amplitude, the maximum valid alternating current voltage value, or an amplitude of a three-phase voltage vector (an arithmetic square root of a sum of squares of phase voltages in the three-phase voltages in a two-phase stationary coordinate system) in the three-phase voltages. In other words, that the target value of the three-phase voltages is greater than the voltage threshold may be that the maximum alternating current voltage amplitude or the maximum valid alternating current voltage value in the three-phase voltages is greater than the voltage threshold. For example, the controller controls the active current and the reactive current that are output by the three-phase inverter circuit. The controller may control the absolute value of the active current and the value of the reactive current that are output by the three-phase inverter circuit to separately change in a negative correlation with the maximum alternating current voltage amplitude or the maximum valid alternating current voltage value in the three-phase voltages. Alternatively, that the target value of the three-phase voltages is greater than the voltage threshold may be that the amplitude of the three-phase voltage vector is greater than the voltage threshold. In other words, the controller may control the absolute value of the active current and the value of the reactive current that are output by the three-phase inverter circuit to separately change in a negative correlation with the amplitude of the three-phase voltage vector.

In some feasible implementations, when the power converter is in the phase-loss on-grid mode, and the target value of the three-phase voltages at the three-phase output end of the three-phase inverter circuit is less than or equal to the voltage threshold, the active current and the reactive current that are output by the three-phase inverter circuit are controlled to be respectively preset fixed values (for example, may be less than or equal to an active current and a reactive current that are output by the three-phase inverter circuit when the power converter operates in a normal on-grid mode). Alternatively, the active power and the reactive power that are output by the three-phase inverter circuit are controlled to be respectively preset fixed values (for example, may be less than or equal to active power and reactive power that are output by the three-phase inverter circuit when the power converter operates in a normal on-grid mode). Herein, when the target value of the three-phase voltages at the three-phase output end of the three-phase inverter circuit is less than or equal to the voltage threshold, after it is identified that the power supply system operates with the phase loss, the active current and the reactive current that are output by the three-phase inverter circuit are controlled to be the preset fixed values. This prevents the three-phase inverter circuit from outputting a large amount of reactive power and active power in the phase-loss period, reduces output power shared by a transmission line corresponding to the normal phase, reduces impact of the power converter on the grid, and enables the power converter to support the switching of the power supply system from the phase-loss on-grid to the normal on-grid without disconnecting from the grid.

In some feasible implementations, when the power converter is in the phase-loss on-grid mode, and the target value of the three-phase voltages at the three-phase output end of the three-phase inverter circuit is greater than the voltage threshold, the absolute value of the active current output by the three-phase inverter circuit is controlled to change in the negative correlation with the target value of the three-phase voltages, and less than or equal to an absolute value of the active current output by the three-phase inverter circuit in the normal on-grid mode before the power converter operates in the phase-loss on-grid mode. Alternatively, the absolute value of the active power output by the three-phase inverter circuit is controlled to change in the negative correlation with the target value of the three-phase voltages, and less than or equal to an absolute value of the active power output by the three-phase inverter circuit in the normal on-grid mode before the power converter operates in the phase-loss on-grid mode. For example, the controller controls the active current output by the three-phase inverter circuit. The active current output by the three-phase inverter circuit may be expressed as:

$$I_{dref} = \left(1 - K_d * (U - U_{thres1})\right) * I_{d0}$$

$K_d$ is an active derating coefficient, U is the target value of the three-phase voltages, $U_{thres1}$ is the voltage threshold, and $I_{d0}$ is the active current output by the three-phase inverter circuit in the normal on-grid mode before the power converter operates in the phase-loss on-grid mode. It may be understood that, when the target value of the three-phase voltages U is greater than the voltage threshold $U_{thres1}$ and $I_{d0}$ is positive, the controller controls the active current output by the three-phase inverter circuit, so that a value of the active current decreases as U increases or increases as U decreases, and a maximum value of the absolute value of the active current does not exceed the absolute value of $I_{d0}$. When the target value of the three-phase voltages U is greater than the voltage threshold $U_{thres1}$ and $I_{d0}$ is negative, the controller controls the active current output by the three-phase inverter circuit, so that the value of the active current increases as U increases or decreases as U decreases, and the maximum value of the absolute value of the active current does not exceed the absolute value of $I_{d0}$.

In some feasible implementations, when the active current output by the three-phase inverter circuit when the power converter operates in the normal on-grid mode is positive, the active current output by the three-phase inverter circuit may be further expressed as:

$$I_{dref} = \min\left(\left(1 - K_d * (U - U_{thres1})\right) * I_N, I_{d0}\right)$$

When the active current output by the three-phase inverter circuit when the power converter operates in the normal on-grid mode is negative, the active current output by the three-phase inverter circuit may be further expressed as:

$$I_{dref} = \max\left(-\left(1 - K_d * (U - U_{thres1})\right) * I_N, I_{d0}\right)$$

$I_N$ is a rated current output by the power converter. Similarly, when the target value of the three-phase voltages U is greater than the voltage threshold $U_{thres1}$ and $I_{d0}$ is positive, the controller controls the active current output by the three-phase inverter circuit, so that the value of the active current decreases as U increases or increases as U decreases, and the maximum value of the absolute value of the active current does not exceed the absolute value of $I_{d0}$. When the target value of the three-phase voltages U is greater than the voltage threshold $U_{thres1}$ and $I_{d0}$ is negative, the controller controls the active current output by the three-phase inverter circuit, so that the value of the active current increases as U increases or decreases as U decreases, and the maximum value of the absolute value of the active current does not exceed the absolute value of $I_{d0}$. In addition, the reactive current output by the three-phase inverter circuit may be expressed as:

$$I_{qref} = -K_q * (U - U_{thres1}) * I_N$$

$K_d$ is a reactive derating coefficient, and when the target value of the three-phase voltages U is greater than the voltage threshold $U_{thres1}$, the controller controls the reactive current output by the three-phase inverter circuit, so that the value of the reactive current decreases as U increases or increases as U decreases. When the reactive current output by the three-phase inverter circuit is greater than 0, it may be referred to as sending a capacitive reactive current. When the reactive current output by the three-phase inverter circuit is less than 0, it may be referred to as sending an inductive reactive current. Optionally, the active current and the reactive current that are output by the three-phase inverter circuit may alternatively be expressed as:

$$I_{dref} = I_{d0} - PI_d(U - U_{thres1})$$

$$I_{qref} = -PI_q(U - U_{thres1})$$

$PI_d$ is an active closed-loop control function, and $PI_q$ is a reactive closed-loop control function. When the target value of the three-phase voltages U is greater than the voltage threshold $U_{thres1}$, a larger difference between U and $U_{thres1}$ indicates larger values of the active closed-loop control function and the reactive closed-loop control function. Therefore, the controller controls the active current and the reactive current that are output by the three-phase inverter circuit, so that the values of the active current and the reactive current decrease as U increases, or increase as U decreases. Herein, after identifying that the power supply system operates with the phase loss, the controller dynamically decreases or increases the output active current based on the values of the three-phase voltages at the three-phase output end of the three-phase inverter circuit, and dynamically decreases or increases the output reactive current based on the values of the three-phase voltages at the three-phase output end of the three-phase inverter circuit, thereby reducing the impact of the power converter on the grid and meeting the active power requirement of the power supply system as much as possible, and enabling the power converter to support the switching of the power supply system from the phase-loss on-grid to the normal on-grid without disconnecting from the grid.

In some feasible implementations, when the power converter is in the phase-loss on-grid mode, and the target value of the three-phase voltages at the three-phase output end of the three-phase inverter circuit is greater than the voltage threshold, the value of the reactive current output by the three-phase inverter circuit is controlled to change in the negative correlation with the target value of the three-phase voltages, and less than or equal to the reactive current output by the three-phase inverter circuit in the normal on-grid mode before the power converter operates in the phase-loss on-grid mode. Alternatively, the value of the reactive power output by the three-phase inverter circuit is controlled to change in the negative correlation with the target value of the three-phase voltages, and less than or equal to the reactive power output by the three-phase inverter circuit in the normal on-grid mode before the power converter operates in the phase-loss on-grid mode. Specifically, for example, the controller controls the reactive current output by the three-phase inverter circuit. The reactive current output by the three-phase inverter circuit may be expressed as:

$$I_{qref} = -K_q * (U - U_{thres1}) * I_N + I_{q0}$$

$I_{q0}$ is the reactive current output by the three-phase inverter circuit in the normal on-grid mode before the power converter operates in the phase-loss on-grid mode. It may be understood that, when the target value of the three-phase voltages U is greater than the voltage threshold $U_{thres1}$, the controller controls the reactive current output by the three-phase inverter circuit, so that the value of the reactive current decreases as U increases or increases as U decreases, and a maximum value of the reactive current does not exceed the reactive current $I_{q0}$ output by the three-phase inverter circuit in the normal on-grid mode before the power converter operates in the phase-loss on-grid mode.

In some feasible implementations, the controller may control the absolute value of the active current and an absolute value of the reactive current that are output by the three-phase inverter circuit to decrease, so that an apparent current is less than or equal to a current threshold; or control the absolute value of the active power and an absolute value of the reactive power that are output by the three-phase inverter circuit to decrease, so that apparent power is equal to a power threshold. Specifically, the apparent current is an arithmetic square root of a sum of squares of the active current and the reactive current that are output by the three-phase inverter circuit, and the apparent power is an arithmetic square root of a sum of squares of the active power and the reactive power that are output by the three-phase inverter circuit. Specifically, for example, the controller controls the absolute value of the active current and the absolute value of the reactive current that are output by the three-phase inverter circuit to decrease. The apparent current output by the three-phase inverter circuit may be expressed as:

$$I_{mref} = \sqrt{I_{dref}^2 + I_{qref}^2}$$

$I_{dref}$ and $I_{qref}$ are respectively the active current and the reactive current that are output by the three-phase inverter circuit. When the apparent current is greater than the current threshold (which may be a maximum current output by the power converter), the controller may control the absolute value of the active current and the absolute value of the reactive current that are output by the three-phase inverter circuit to decrease, so that a reduced active current and a reduced reactive current may be respectively expressed as:

$$I_{dref\_lmt} = \frac{I_{max}}{I_{mref}} I_{dref}$$

$$I_{qref\_lmt} = \frac{I_{max}}{I_{mref}} I_{qref}$$

$I_{max}$ is the maximum current output by the power converter. The active current and the reactive current that are output by the three-phase inverter circuit are controlled, so that the apparent current does not exceed the current threshold, thereby avoiding overcurrent of the power converter, and further improving operating safety of the power converter.

In some feasible implementations, the controller may control only the absolute value of the active current output by the three-phase inverter circuit to decrease, so that the apparent current is less than or equal to the current threshold; or control only the absolute value of the active power output by the three-phase inverter circuit to decrease, so that the apparent power is equal to the power threshold. Specifically, for example, the controller controls the active current output by the three-phase inverter circuit to decrease. When the apparent current is greater than the current threshold (which may be the maximum current output by the power converter), the controller may control the active current output by the three-phase inverter circuit to decrease. When the active current output by the three-phase inverter circuit is positive, the active current may be expressed as:

$$I_{dref\_lmt} = \min\left(I_{dref}, \sqrt{I_{max}^2 - I_{qref}^2}\right)$$

Optionally, when the active current output by the three-phase inverter circuit is negative, the active current may be expressed as:

$$I_{dref\_lmt} = \max\left(I_{dref}, -\sqrt{I_{max}^2 - I_{qref}^2}\right)$$

The active current output by the three-phase inverter circuit is controlled, so that the apparent current does not exceed the current threshold and the reactive power requirement of the power supply system is met as much as possible, thereby avoiding the overcurrent of the power converter, and further improving the operating safety of the power converter.

In some feasible implementations, the controller may control only the absolute value of the reactive current output by the three-phase inverter circuit to decrease, so that the apparent current is less than or equal to the current threshold; or control only the absolute value of the reactive power output by the three-phase inverter circuit to decrease, so that the apparent power is equal to the power threshold. Specifically, for example, the controller controls the reactive current output by the three-phase inverter circuit to decrease. When the apparent current is greater than the current threshold (which may be the maximum current output by the power converter), the controller may control the reactive current output by the three-phase inverter circuit to decrease. When the reactive current output by the three-phase inverter circuit is positive, the reactive current may be expressed as:

$$I_{qref\_lmt} = \min\left(I_{qref}, \sqrt{I_{max}^2 - I_{dref}^2}\right)$$

Optionally, when the reactive current output by the three-phase inverter circuit is negative, the reactive current may be expressed as:

$$I_{qref\_lmt} = \max\left(I_{qref}, -\sqrt{I_{max}^2 - I_{dref}^2}\right)$$

The reactive current output by the three-phase inverter circuit is controlled, so that the apparent current does not exceed the current threshold and the active power requirement of the power supply system is met as much as possible, thereby avoiding the overcurrent of the power converter, and further improving the operating safety of the power converter.

In some feasible implementations, when the power converter operates in the normal on-grid mode, the controller may control the active current and the reactive current that are output by the three-phase inverter circuit to be respectively equal to an active current instruction value and a reactive current instruction value, where the active current instruction value is determined by input power provided by the direct current power supply or required power of the grid, and the reactive current instruction value is determined by an output voltage of the power converter; or control the active power and the reactive power that are output by the three-phase inverter circuit to be respectively equal to an active power instruction value and a reactive power instruction value, where the active power instruction value is determined by the input power provided by the direct current power supply or the required power of the grid, and the reactive power instruction value is determined by the output voltage of the power converter. Specifically, the controller may obtain the three-phase voltages at the three-phase output end of the three-phase inverter circuit, and when the value of the maximum phase voltage output by the three-phase inverter circuit is less than a fourth voltage value, and the value of the minimum phase voltage is greater than a fifth voltage value, the controller determines that the power converter is in the normal on-grid mode. Alternatively, when a difference between a maximum value and a minimum value of the three-phase voltages is less than a second preset threshold, the controller determines that the power converter is in the normal on-grid mode. The fourth voltage value is greater than the third voltage value and less than or equal to the first voltage value, and the fifth voltage value is greater than or equal to the second voltage value and less than the third voltage value. The active current instruction value and the reactive current instruction value, or the active power instruction value and the reactive power instruction value may be current and power instructions generated by the controller based on three-phase voltages at the three-phase output end of the three-phase inverter circuit and the voltage of the grid, or may be obtained from an upper-level scheduling device. For example, the active current and the reactive current that are output by the three-phase inverter circuit are controlled. When the power converter is a photovoltaic inverter, the controller may obtain the active current instruction value based on maximum output power of a photovoltaic module connected to an input end of the photovoltaic inverter, that is, the active current instruction value may be positively correlated with a value of the maximum output power of the photovoltaic module. The controller may obtain the reactive current instruction value based on a value of the output voltage of the photovoltaic inverter (when the output voltage is excessively high or excessively low, the reactive current is adjusted to adjust the output voltage), that is, the reactive current instruction value may change in a negative correlation with the value of the output voltage of the photovoltaic inverter. When the power converter is a power conversion system, the controller may obtain the active current instruction value based on required power at an output end of the power conversion system connected to the grid, that is, the active current instruction value may be positively correlated with a value of the required power of the grid. The controller may obtain the reactive current instruction value based on a value of the output voltage of the power conversion system, that is, the reactive current instruction value may change in a negative correlation with the value of the output voltage of the power conversion system. After obtaining the current or power instruction, the controller may control the active and reactive currents or power of the power converter to be recovered to instructions before the fault with reference to a preset gradient. The controller detects, based on the three-phase voltages at the three-phase output end of three-phase inverter circuit, that the voltage at the port of the power converter recovers to normal, that is, whether the power supply system switches from the phase-loss on-grid to the normal on-grid, and recovers the instructions in the normal on-grid mode after identifying that the voltage at the port recovers to normal. This ensures support of the power converter for the grid.

In some feasible implementations, the controller may obtain the three-phase voltages at the three-phase output end of the three-phase inverter circuit, and when the difference between the at least one phase voltage and the another phase voltage in the three-phase voltages is less than an eighth voltage value, the controller determines that the power converter is in the normal on-grid mode. The eighth voltage value is less than or equal to the first preset threshold. When an absolute value of a difference between the phase voltages in the three-phase voltages at the three-phase output end of the three-phase inverter circuit decreases, the controller determines that the power supply system successfully performs reclosing, and recovers the instructions in the normal on-grid mode after identifying the normal on-grid. This ensures support of the power converter for the grid.

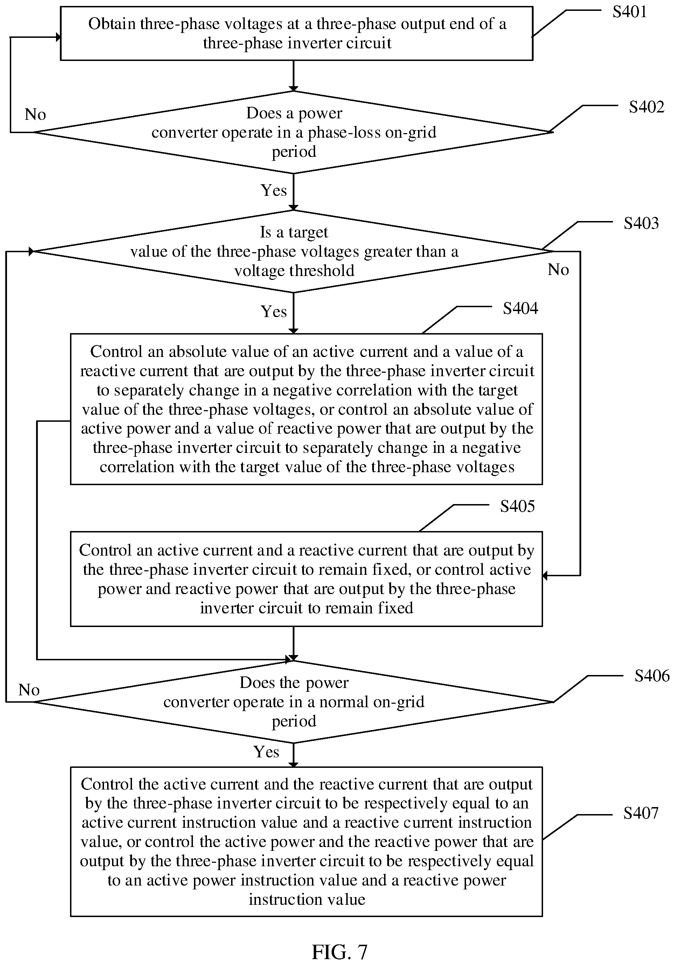

FIG. 7 is a schematic flowchart of a power converter control method according to this application. The power converter control method provided in this application is applicable to the power converter in any power supply system shown in FIG. 1 to FIG. 6. The power converter may include a direct current conversion circuit and a three-phase inverter circuit. An input end of the direct current conversion circuit may be connected to a direct current power supply, an output end of the direct current conversion circuit may be connected to an input end of the three-phase inverter circuit, and an output end of the three-phase inverter circuit is configured to connect to a grid. As shown in FIG. 7, the power converter control method provided in this application includes the following steps.

S401: Obtain three-phase voltages at a three-phase output end of the three-phase inverter circuit.

S402: Determine whether the power converter operates in a phase-loss on-grid period; and if a determining result is yes, perform step S403; or if a determining result is no, perform step S401.

In some feasible implementations, the power converter may obtain the three-phase voltages from the three-phase output end of the three-phase inverter circuit, and when a value of a maximum phase voltage output by the three-phase inverter circuit is greater than a first voltage value, a value of a minimum phase voltage is less than a second voltage value, and a positive-sequence component of the three-phase voltages is greater than a third voltage value, determine that the power converter is in a phase-loss on-grid mode; or when an absolute value of a difference between at least one phase voltage and another phase voltage in the three-phase voltages at the three-phase output end of the three-phase inverter circuit is greater than a first voltage value, and a positive-sequence component of the three-phase voltages is greater than a third voltage value, determine that the power converter is in a phase-loss on-grid mode. Herein, the first voltage value may be a high voltage ride-through trigger threshold or an overvoltage protection point, the second voltage value may be a low voltage ride-through trigger threshold or an undervoltage protection point, the first voltage value is greater than the third voltage value, and the third voltage value is greater than the second voltage value. The controller detects, based on the three-phase voltages at the three-phase output end of the three-phase inverter circuit, whether the power supply system operates with a phase loss. No additional phase loss detection apparatus is required, costs of detecting a phase-loss working condition are low, and a negative-sequence reactive power or a harmonic does not need to be injected into the grid for detection, to avoid affecting voltage quality of the grid by a phase-loss detection process.

S403: Determine whether a target value of the three-phase voltages is greater than a voltage threshold;

and if a determining result is yes, perform step S404; or if a determining result is no, perform step S405.

S404: Control an absolute value of an active current and a value of a reactive current that are output by the three-phase inverter circuit to separately change in a negative correlation with the target value of the three-phase voltages, or control an absolute value of active power and a value of reactive power that are output by the three-phase inverter circuit to separately change in a negative correlation with the target value of the three-phase voltages.

S405: Control an active current and a reactive current that are output by the three-phase inverter circuit to keep fixed, or control active power and reactive power that are output by the three-phase inverter circuit to keep fixed.

When the power converter is in the phase-loss on-grid mode, and the target value of the three-phase voltages at the three-phase output end of the three-phase inverter circuit is greater than the voltage threshold, the controller may control the absolute value of the active current and the value of the reactive current that are output by the three-phase inverter circuit to separately change in the negative correlation with the target value of the three-phase voltages, or control the absolute value of the active power and the value of the reactive power that are output by the three-phase inverter circuit to separately change in the negative correlation with the target value of the three-phase voltages. Specifically, that the target value of the three-phase voltages is greater than the voltage threshold may be that a maximum alternating current voltage amplitude or a maximum valid alternating current voltage value in the three-phase voltages is greater than the voltage threshold. For example, the controller controls the active current and the reactive current that are output by the three-phase inverter circuit. The controller may control the absolute value of the active current and the value of the reactive current that are output by the three-phase inverter circuit to separately change in a negative correlation with the maximum alternating current voltage amplitude or the maximum valid alternating current voltage value in the three-phase voltages. Alternatively, that the target value of the three-phase voltages is greater than the voltage threshold may be that an amplitude of a three-phase voltage vector is greater than the voltage threshold. In other words, the controller may control the absolute value of the active current and the value of the reactive current that are output by the three-phase inverter circuit to separately change in a negative correlation with the amplitude of the three-phase voltage vector.

In some feasible implementations, when the power converter is in the phase-loss on-grid mode, and the target value of the three-phase voltages at the three-phase output end of the three-phase inverter circuit is less than or equal to the voltage threshold, the active current and the reactive current that are output by the three-phase inverter circuit are controlled to be respectively preset fixed values. In addition, the absolute value of the active current output by the three-phase inverter circuit is less than or equal to an absolute value of an active current output by the three-phase inverter circuit when the power converter operates in a normal on-grid mode, and the reactive current output by the three-phase inverter circuit is less than or equal to a reactive current output by the three-phase inverter circuit when the power converter operates in the normal on-grid mode, for example, may be the active current and the reactive current that are output by the three-phase inverter circuit in the normal on-grid mode before the power converter operates in the phase-loss on-grid mode. Alternatively, the active power and the reactive power that are output by the three-phase inverter circuit are controlled to be respectively preset fixed values. In addition, the absolute value of the active power output by the three-phase inverter circuit is less than or equal to an absolute value of active power output by the three-phase inverter circuit when the power converter operates in the normal on-grid mode, and the reactive power output by the three-phase inverter circuit is less than or equal to reactive power output by the three-phase inverter circuit when the power converter operates in the normal on-grid mode, for example, may be the active power and the reactive power that are output by the three-phase inverter circuit in the normal on-grid mode before the power converter operates in the phase-loss on-grid mode. Herein, when the target value of the three-phase voltages at the three-phase output end of the three-phase inverter circuit is less than or equal to the voltage threshold, after it is identified that the power supply system operates with the phase loss, the active current and the reactive current that are output by the three-phase inverter circuit are controlled to be the preset fixed values. This prevents the three-phase inverter circuit from outputting a large amount of reactive power and active power in a phase-loss period, reduces output power shared by a transmission line corresponding to a normal phase, reduces impact of the power converter on the grid, and enables the power converter to support switching of the power supply system from phase-loss on-grid to normal on-grid without disconnecting from the grid.

In some feasible implementations, when the power converter is in the phase-loss on-grid mode, and the target value of the three-phase voltages at the three-phase output end of the three-phase inverter circuit is greater than the voltage threshold, the absolute value of the active current output by the three-phase inverter circuit is controlled to change in the negative correlation with the target value of the three-phase voltages, and less than or equal to the absolute value of the active current output by the three-phase inverter circuit in the normal on-grid mode before the power converter operates in the phase-loss on-grid mode. Alternatively, the absolute value of the active power output by the three-phase inverter circuit is controlled to change in the negative correlation with the target value of the three-phase voltages, and less than or equal to the absolute value of the active power output by the three-phase inverter circuit in the normal on-grid mode before the power converter operates in the phase-loss on-grid mode. Herein, after identifying that the power supply system operates with the phase loss, the controller dynamically decreases or increases the output active current based on values of the three-phase voltages at the three-phase output end of the three-phase inverter circuit. This avoids overload of active power and reactive power that are borne by a normal phase in the power converter in the phase-loss period, meets active power and reactive power requirements of the power supply system as much as possible, and prevents an output port of the normal phase from being damaged due to overheat caused by an increase in a voltage and a current, so that the power converter keeps on-grid in the phase-loss period until the power supply system is supported in completing the switching from the phase-loss on-grid to the normal on-grid.

In some feasible implementations, when the power converter is in the phase-loss on-grid mode, and the target value of the three-phase voltages at the three-phase output end of the three-phase inverter circuit is greater than the voltage threshold, the value of the reactive current output by the three-phase inverter circuit is controlled to change in the negative correlation with the target value of the three-phase voltages, and less than or equal to the reactive current output by the three-phase inverter circuit in the normal on-grid mode before the power converter operates in the phase-loss on-grid mode. Alternatively, the value of the reactive power output by the three-phase inverter circuit is controlled to change in the negative correlation with the target value of the three-phase voltages, and less than or equal to the reactive power output by the three-phase inverter circuit in the normal on-grid mode before the power converter operates in the phase-loss on-grid mode. Herein, after identifying that the power supply system operates with the phase loss, the controller dynamically decreases or increases the output active current based on the values of the three-phase voltages at the three-phase output end of the three-phase inverter circuit, and dynamically decreases or increases the output reactive current based on the values of the three-phase voltages at the three-phase output end of the three-phase inverter circuit, thereby reducing the impact of the power converter on the grid and meeting the active power requirement of the power supply system as much as possible, and enabling the power converter to support the switching of the power supply system from the phase-loss on-grid to the normal on-grid without disconnecting from the grid.

In some feasible implementations, the controller may control the absolute value of the active current and an absolute value of the reactive current that are output by the three-phase inverter circuit to decrease, so that an apparent current is less than or equal to a current threshold; or control the absolute value of the active power and an absolute value of the reactive power that are output by the three-phase inverter circuit to decrease, so that apparent power is equal to a power threshold. Specifically, the apparent current is an arithmetic square root of a sum of squares of the active current and the reactive current that are output by the three-phase inverter circuit, and the apparent power is an arithmetic square root of a sum of squares of the active power and the reactive power that are output by the three-phase inverter circuit. The active current and the reactive current that are output by the three-phase inverter circuit are controlled, so that the apparent current does not exceed the current threshold, thereby avoiding overcurrent of the power converter, and further improving operating safety of the power converter.

In some feasible implementations, the controller may control only the absolute value of the active current output by the three-phase inverter circuit to decrease, so that the apparent current is less than or equal to the current threshold; or control only the absolute value of the active power output by the three-phase inverter circuit to decrease, so that the apparent power is equal to the power threshold. The active current output by the three-phase inverter circuit is controlled, so that the apparent current does not exceed the current threshold and the reactive power requirement of the power supply system is met as much as possible, thereby avoiding the overcurrent of the power converter, and further improving the operating safety of the power converter.

In some feasible implementations, the controller may control only the absolute value of the reactive current output by the three-phase inverter circuit to decrease, so that the apparent current is less than or equal to the current threshold; or control only the absolute value of the reactive power output by the three-phase inverter circuit to decrease, so that the apparent power is equal to the power threshold. The reactive current output by the three-phase inverter circuit is controlled, so that the apparent current does not exceed the current threshold and the active power requirement of the power supply system is met as much as possible, thereby avoiding the overcurrent of the power converter, and further improving the operating safety of the power converter.

S406: Determine whether the power converter operates in a normal on-grid period; and if a determining result is yes, perform step S407; or if a determining result is no, perform step S403.

S407: Control the active current and the reactive current that are output by the three-phase inverter circuit to be respectively equal to an active current instruction value and a reactive current instruction value, or control the active power and the reactive power that are output by the three-phase inverter circuit to be respectively equal to an active power instruction value and a reactive power instruction value.

In some feasible implementations, the power converter may obtain the three-phase voltages output by the three-phase inverter circuit, and when the value of the maximum phase voltage output by the three-phase inverter circuit is less than a fourth voltage value, and the value of the minimum phase voltage is greater than a fifth voltage value, determine that the power converter is in the normal on-grid period; or when a difference between the value of the maximum phase voltage and the value of the minimum phase voltage is less than a second preset threshold, determine that the power converter is in the normal on-grid period. The fourth voltage value is greater than the third voltage value and less than or equal to the first voltage value, and the fifth voltage value is greater than or equal to the second voltage value and less than the third voltage value. The active current instruction value and the reactive current instruction value, or the active power instruction value and the reactive power instruction value may be obtained from an upper-level scheduling device. After obtaining the current or power instruction, the active and reactive currents or power of the power converter may be controlled to be recovered to instructions before the fault with reference to a preset gradient. For example, when the power converter is a photovoltaic inverter, the controller may obtain the active current instruction value based on maximum output power of a photovoltaic module connected to an input end of the photovoltaic inverter, that is, the active current instruction value may be positively correlated with a value of the maximum output power of the photovoltaic module. The controller may obtain the reactive current instruction value based on a value of the output voltage of the photovoltaic inverter, for example, when the output voltage is excessively high or excessively low, the reactive current is adjusted to adjust the output voltage, that is, the reactive current instruction value may change in a negative correlation with the value of the output voltage of the photovoltaic inverter. When the power converter is a power conversion system, the controller may obtain the active current instruction value based on required power at an output end of the power conversion system connected to the grid, that is, the active current instruction value may be positively correlated with a value of the required power of the grid. The controller may obtain the reactive current instruction value based on a value of the output voltage of the power conversion system, that is, the reactive current instruction value may change in a negative correlation with the value of the output voltage of the power conversion system. The active current and the reactive current that are output by the three-phase inverter circuit are controlled to be the preset fixed values during phase-loss operation of the power supply system, based on the three-phase voltages output by the three-phase inverter circuit, that the voltage at the port of the power converter recovers to normal is detected, and instructions in the normal on-grid period are recovered after it is identified that the voltage at the port recovers to normal. The active current instruction value is determined by input power provided by the direct current power supply or the required power of the grid, and the reactive current instruction value is determined by the output voltage of the power converter. This ensures that the power converter supports the grid in the normal on-grid period after a faulty phase is resolved.

In some feasible implementations, the power converter may obtain the three-phase voltages output by the three-phase inverter circuit, and when the absolute value of the difference between the at least one phase voltage and the another phase voltage in the three-phase voltages is less than a third preset threshold, determine that the power converter is in the normal on-grid period. The third preset threshold is less than or equal to the first preset threshold. When the absolute value of the difference between phase voltages in the three-phase voltages output by the three-phase inverter circuit decreases, it is determined that the power supply system successfully switches from the phase-loss on-grid to the normal on-grid. When the third preset threshold is less than the first preset threshold, accuracy of determining that the power converter is normally on-grid can be further improved. This avoids misjudgment when the power converter is not fully recovered to the normal on-grid, and improves a success rate of switching from the phase-loss on-grid to the normal on-grid.

In this application, the controller in the power converter determines, based on the three-phase voltages output by the three-phase inverter circuit, whether the power supply system operates with the phase loss. No additional phase loss detection apparatus is required, the costs of detecting the phase-loss working condition are low, and the negative-sequence reactive power or the harmonic does not need to be injected into the grid for the detection, to avoid affecting the voltage quality of the grid. After identifying that the power supply system operates with the phase loss, that is, identifying that the switch corresponding to the fault phase in the power converter is turned off, the controller dynamically decreases or increases the output active current and the output reactive current based on the three-phase voltages at the three-phase output end of the three-phase inverter circuit. This avoids the overload of the active power and the reactive power that are borne by the normal phase in the power converter in the phase-loss period, meets the active power and reactive power requirements of the power supply system as much as possible, and prevents the output port of the normal phase from being damaged due to the overheat caused by the increase in the voltage and the current, so that the power converter keeps on-grid in the phase-loss period until the power supply system is supported in completing the switching from the phase-loss on-grid to the normal on-grid. In addition, based on the three-phase voltages output by the three-phase inverter circuit, that the voltage at the port of the power converter recovers to normal is detected, and the instructions in the normal on-grid period are recovered after it is identified that the voltage at the port recovers to normal. The active current instruction value is determined by the input power provided by the direct current power supply or the required power of the grid, and the reactive current instruction value is determined by the output voltage of the power converter. This ensures that the power converter supports the grid in the normal on-grid period after the faulty phase is resolved.

**Claims**

1. A power converter, wherein the power converter comprises a three-phase inverter circuit and a controller, an input end of the three-phase inverter circuit is configured to connect to a direct current power supply, and a three-phase output end of the three-phase inverter circuit is configured to connect to a grid; and
   the controller is configured to: when a target value of three-phase voltages output by the three-phase inverter circuit is greater than a voltage threshold, a value of a maximum phase voltage in the three-phase voltages output by the three-phase inverter circuit is greater than a first voltage value, a value of a minimum phase voltage in the three-phase voltages output by the three-phase inverter circuit is less than a second voltage value, and a positive-sequence component of the three-phase voltages is greater than a third voltage value, or when an absolute value of a difference between any phase voltage and another phase voltage in three-phase voltages output by the three-phase inverter circuit is greater than a first preset threshold, and a positive-sequence component of the three-phase voltages is greater than a third voltage value, control an absolute value of an active current and a value of a reactive current that are output by the three-phase inverter circuit to separately change in a negative correlation with the target value of the three-phase voltages, wherein the first voltage value is greater than the third voltage value, the third voltage value is greater than the second voltage value, the target value of the three-phase voltages is a maximum alternating current voltage amplitude or a maximum valid alternating current voltage value in the three-phase voltages, or an amplitude of a three-phase voltage vector output by the three-phase inverter circuit, the value of the maximum phase voltage is the maximum alternating current voltage amplitude or the maximum valid alternating current voltage value in the three-phase voltages, and the value of the minimum phase voltage is a minimum alternating current voltage amplitude or a minimum valid alternating current voltage value in the three-phase voltages.

2. The power converter according to claim 1, wherein the controller is configured to control the absolute value of the active current output by the three-phase inverter circuit to change in the negative correlation with the target value of the three-phase voltages and to be less than or equal to a maximum value of an absolute value of an active current instruction value, wherein the active current instruction value is determined by input power provided by the direct current power supply or required power of the grid.

3. The power converter according to claim 2, wherein the controller is configured to control the value of the reactive current output by the three-phase inverter circuit to change in the negative correlation with the target value of the three-phase voltages and to be less than or equal to a maximum value of an absolute value of a reactive current instruction value, wherein the reactive current instruction value is determined by an output voltage of the power converter.

4. The power converter according to any one of claims 1 to 3, wherein the controller is configured to control the absolute value of the active current and/or an absolute value of the reactive current that are/is output by the three-phase inverter circuit to decrease, so that an apparent current is less than or equal to a current threshold, wherein the apparent current is an arithmetic square root of a sum of squares of the active current and the reactive current that are output by the three-phase inverter circuit.

5. The power converter according to any one of claims 1 to 4, wherein the controller is configured to: when the target value of the three-phase voltages is less than or equal to the voltage threshold, control the active current and the reactive current that are output by the three-phase inverter circuit to keep fixed; and the absolute value of the active current output by the three-phase inverter circuit to be less than or equal to the maximum value of the absolute value of the active current instruction value, and the absolute value of the reactive current output by the three-phase inverter circuit to be less than or equal to the maximum value of the absolute value of the reactive current instruction value.

6. The power converter according to any one of claims 2 to 5, wherein the controller is configured to: when the value of the maximum phase voltage is less than a fourth voltage value, and the value of the minimum phase voltage is greater than a fifth voltage value, or when a difference between the value of the maximum phase voltage and the value of the minimum phase voltage is less than a second preset threshold, control the active current output by the three-phase inverter circuit to change with the input power provided by the direct current power supply or the required power of the grid and the reactive current output by the three-phase inverter circuit to change with an output voltage of the three-phase inverter circuit, wherein the fourth voltage value is greater than the third voltage value and less than or equal to the first voltage value, and the fifth voltage value is greater than or equal to the second voltage value and less than the third voltage value.

7. The power converter according to claim 6, wherein the controller is configured to: when an absolute value of a difference between at least one phase voltage and another phase voltage in the three-phase voltages is less than a third preset threshold, control the active current output by the three-phase inverter circuit to change with the input power provided by the direct current power supply or the required power of the grid and the reactive current output by the three-phase inverter circuit to change with the output voltage of the three-phase inverter circuit, wherein the third preset threshold is less than or equal to the first preset threshold.

8. The power converter according to claim 7, wherein the power converter is a photovoltaic inverter, the direct current power supply is a photovoltaic module, the active current instruction value is positively correlated with a value of maximum output power of the photovoltaic module, and the reactive current instruction value changes in a negative correlation with a value of the output voltage of the photovoltaic inverter.

9. The power converter according to claim 7, wherein the power converter is a power conversion system, the direct current power supply is an energy storage battery, the active current instruction value is positively correlated with a value of the required power of the grid, and the reactive current instruction value changes in a negative correlation with a value of the output voltage of the converter.

10. A power converter control method, wherein the method comprises:
    when a target value of three-phase voltages output by a three-phase inverter circuit in the power converter is greater than a voltage threshold, a value of a maximum phase voltage in the three-phase voltages output by the three-phase inverter circuit is greater than a first voltage value, a value of a minimum phase voltage in the three-phase voltages output by the three-phase inverter circuit is less than a second voltage value, and a positive-sequence component of the three-phase voltages is greater than a third voltage value, or when an absolute value of a difference between any phase voltage and another phase voltage in three-phase voltages output by a three-phase inverter circuit in the power converter is greater than a first preset threshold, and a positive-sequence component of the three-phase voltages is greater than a third voltage value, controlling an absolute value of an active current and a value of a reactive current that are output by the three-phase inverter circuit to separately change in a negative correlation with the target value of the three-phase voltages, wherein an input end of the three-phase inverter circuit is configured to connect to a direct current power supply, a three-phase output end of the three-phase inverter circuit is configured to connect to a grid, the first voltage value is greater than the third voltage value, the third voltage value is greater than the second voltage value, the target value of the three-phase voltages is a maximum alternating current voltage amplitude or a maximum valid alternating current voltage value in the three-phase voltages, or an amplitude of a three-phase voltage vector output by the three-phase inverter circuit, the value of the maximum phase voltage is the maximum alternating current voltage amplitude or the maximum valid alternating current voltage value in the three-phase voltages, and the value of the minimum phase voltage is a minimum alternating current voltage amplitude or a minimum valid alternating current voltage value in the three-phase voltages.

11. The method according to claim 10, wherein the method comprises:
    controlling the absolute value of the active current output by the three-phase inverter circuit to change in the negative correlation with the target value of the three-phase voltages and to be less than or equal to a maximum value of an absolute value of an active current instruction value, wherein the active current instruction value is determined by input power provided by the direct current power supply or required power of the grid.

12. The method according to claim 11, wherein the method comprises:
    controlling the value of the reactive current output by the three-phase inverter circuit to change in the negative correlation with the target value of the three-phase voltages and to be less than or equal to a maximum value of an absolute value of a reactive current instruction value, wherein the reactive current instruction value is determined by an output voltage of the power converter.

13. The method according to any one of claims 10 to 12, wherein the method comprises:
    controlling the absolute value of the active current and/or an absolute value of the reactive current that are/is output by the three-phase inverter circuit to decrease, so that an apparent current is less than or equal to a current threshold, wherein the apparent current is an arithmetic square root of a sum of squares of the active current and the reactive current that are output by the three-phase inverter circuit.

14. The method according to any one of claims 10 to 13, wherein the method comprises:

when the target value of the three-phase voltages is less than or equal to the voltage threshold, controlling the active current and the reactive current that are output by the three-phase inverter circuit to keep fixed; and the absolute value of the active current output by the three-phase inverter circuit to be less than or equal to the maximum value of the absolute value of the active current instruction value, and the absolute value of the reactive current output by the three-phase inverter circuit to be less than or equal to the maximum value of the absolute value of the reactive current instruction value.

15. The method according to any one of claims 11 to 14, wherein the method comprises:
when the value of the maximum phase voltage is less than a fourth voltage value, and the value of the minimum phase voltage is greater than a fifth voltage value, or when a difference between the value of the maximum phase voltage and the value of the minimum phase voltage is less than a second preset threshold, controlling the active current output by the three-phase inverter circuit to change with the input power provided by the direct current power supply or the required power of the grid and the reactive current output by the three-phase inverter circuit to change with an output voltage of the three-phase inverter circuit, wherein the fourth voltage value is greater than the third voltage value and less than or equal to the first voltage value, and the fifth voltage value is greater than or equal to the second voltage value and less than the third voltage value.

FIG. 1

EP 4 593 272 A1

FIG. 2

FIG. 3

EP 4 593 272 A1

FIG. 4

EP 4 593 272 A1

Phase-loss on-grid mode

U

Id

Iq

FIG. 5

FIG. 6

Obtain three-phase voltages at a three-phase output end of a three-phase inverter circuit — S401

Does a power converter operate in a phase-loss on-grid period — S402

No

Yes

Is a target value of the three-phase voltages greater than a voltage threshold — S403

No

Yes

Control an absolute value of an active current and a value of a reactive current that are output by the three-phase inverter circuit to separately change in a negative correlation with the target value of the three-phase voltages, or control an absolute value of active power and a value of reactive power that are output by the three-phase inverter circuit to separately change in a negative correlation with the target value of the three-phase voltages — S404

Control an active current and a reactive current that are output by the three-phase inverter circuit to remain fixed, or control active power and reactive power that are output by the three-phase inverter circuit to remain fixed — S405

Does the power converter operate in a normal on-grid period — S406

No

Yes

Control the active current and the reactive current that are output by the three-phase inverter circuit to be respectively equal to an active current instruction value and a reactive current instruction value, or control the active power and the reactive power that are output by the three-phase inverter circuit to be respectively equal to an active power instruction value and a reactive power instruction value — S407

FIG. 7

Europäisches
Patentamt

European
Patent Office

Office européen
des brevets

# EUROPEAN SEARCH REPORT

**Application Number**

EP 25 15 3639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 280 446 A1 (MITSUBISHI ELECTRIC CORP [JP]) 22 November 2023 (2023-11-22)<br>* paragraph [0011] - paragraph [0014] *<br>* paragraph [0035] - paragraph [0120] *<br>* figures 1,4,5,10 * | 1-15 | INV.<br>H02M1/00<br>H02M1/32<br>H02M7/44 |
| A | US 2015/177335 A1 (HALT CHRISTIAN [DE] ET AL) 25 June 2015 (2015-06-25)<br>* the whole document * | 1-15 | |

**TECHNICAL FIELDS
SEARCHED       (IPC)**

H02M
H02J

The present search report has been drawn up for all claims

| Place of search | Date of completion of the search | Examiner |
|---|---|---|
| The Hague | 12 June 2025 | Lochhead, Steven |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 3639

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2025

| Patent document cited in search report | | Publication date | Patent family member(s) | Publication date |
|---|---|---|---|---|
| EP 4280446 | A1 | 22-11-2023 | EP 4280446 A1 | 22-11-2023 |
| | | | JP 7224468 B2 | 17-02-2023 |
| | | | JP WO2022153483 A1 | 21-07-2022 |
| | | | US 2024072642 A1 | 29-02-2024 |
| | | | WO 2022153483 A1 | 21-07-2022 |
| US 2015177335 | A1 | 25-06-2015 | CN 104730406 A | 24-06-2015 |
| | | | DE 102013114729 A1 | 25-06-2015 |
| | | | US 2015177335 A1 | 25-06-2015 |

EPO FORM P0459

For more details about this annex : see Official Journal of the European Patent Office, No. 12/82